# EUROPÄISCHE PATENTSCHRIFT

(11) **EP 2 347 113 B1**
(45) Veröffentlichungstag und Bekanntmachung des Hinweises auf die Patenterteilung: **12.02.2014**
(21) Anmeldenummer: 09781577.3
(22) Anmeldetag: 06.08.2009
(51) Int. Cl.: F02D 41/40, F02D 29/02

(54) **VERFAHREN ZUM BETREIBEN EINES SELBSTVERDICHTENDEN FLUGZEUGMOTORS**
METHOD FOR OPERATING A SELF-COMPRESSING AIRCRAFT ENGINE
PROCÉDÉ POUR FAIRE FONCTIONNER UN MOTEUR D'AVION À AUTO-COMPRESSION

(30) Priorität: 16.10.2008 DE 102008042915
(43) Veröffentlichungstag der Anmeldung: 27.07.2011
(73) Patentinhaber: Technify Motors GmbH, 09356 St. Egidien (DE)
(72) Erfinder: BOLLEN, Erik, 22303 Hamburg (DE)
(74) Vertreter: adares Patent- und Rechtsanwälte Reininger & Partner
(86) Internationale Anmeldenummer: PCT/EP2009/060234
(87) Internationale Veröffentlichungsnummer: WO 2010/043431

(56) Entgegenhaltungen:
- EP-A- 1 445 462
- FR-A- 2 754 310
- US-A- 5 261 366

## Beschreibung

Die Erfindung betrifft ein Verfahren zum Betreiben eines selbstverdichtenden Flugzeugmotors, insbesondere eines Flugdieselkolbenmotors, der mit einem bestimmten Ladedruck der in einen Zylinder eingebrachten Verbrennungsluft und mit einer Vor- und einer Haupteinspritzung des Kraftstoffs am oberen Totpunkt betrieben wird.

Das Prinzip des Dieselkolbenmotors besteht in der Selbstzündung des in die im Zylinder hoch verdichtete und dadurch heiße Verbrennungsluft eingespritzten Kraftstoffs. Bei der Einspritzung des Kraftstoffs in den Brennraum vor dem oberen Totpunkt des Kolbens ist die Verdichtung der Luft und damit deren Temperatur so hoch, dass der eingespritzte Kraftstoff verdampfen und sich das Dampf-LuftGemisch entzünden kann. Bei Flugdieselmotoren verringert sich jedoch mit steigender Flughöhe die Leistung, und zwar aufgrund der Verringerung des Luftdrucks und der Luftdichte und der damit verbundenen geringeren Verdichtung und Temperatur der Luft im Brennraum. Bei zu geringer Verdichtung und dementsprechend nicht ausreichender Temperatur der verdichteten Luft, wenn beispielsweise die Flughöhe und damit die Leistung des selbstverdichtenden Motors verringert wird, das heißt bei niedrigen Leistungsstellungen in großer Höhe, kann die Selbstzündung aussetzen und der Motor ausgehen. Ein Verfahren zum Betreiben eines Dieselkolbenmotors in Abhängigkeit von Einlassdruck ist aus der Patentschrift EP 1445 462 bekannt.

Der Erfindung liegt daher die Aufgabe zugrunde, ein Verfahren zur Steuerung eines Flugdieselkolbenmotors anzugeben, das einen störungsfreien Motorbetrieb bei niedrigen Lasten auch in größerer Höhe aufrecht erhält.

Erfindungsgemäß wird die Aufgabe mit einem Verfahren gemäß den Merkmalen des Patentanspruchs 1 gelöst. Weitere Merkmale und vorteilhafte Weiterbildungen der Erfindung sind Gegenstand der Unteransprüche.

Der Kern der Erfindung besteht gemäß einem ersten wichtigen Merkmal darin, dass der Beginn der Kraftstoffeinspritzung und damit die Zündung und Verbrennung des Kraftstoffs auf einen in Abhängigkeit von der jeweiligen Flughöhe früheren Zeitpunkt verlegt wird, so dass bei größerer Höhe eine größere Wärmemenge erzeugt wird, die die Zündung und Verbrennung auch bei vermindertem Luftdruck in größerer Höhe und dadurch verringerter Verdichtung der Verbrennungsluft aufrecht erhält.

Die nach vorn verschobene Brennstoffeinspritzung umfasst dabei eine Voreinspritzung und eine Haupteinspritzung. Das heißt der Motor wird so gesteuert, dass das gesamte Einspritzpaket mit steigender Höhe nach vorn verlegt wird. Zusätzlich wird der zeitliche Abstand zwischen der Voreinspritzung und der Haupteinspritzung mit steigender Flughöhe angepasst, um so mehr Verlustenergie und damit mehr Wärme zu erzeugen und das Zündverhalten des Motors in größerer Flughöhe weiter zu verbessern, und zwar ohne die an den Propeller abgegebene Motorleistung stärker zu beeinflussen.

Gemäß einem weiteren wichtigen Merkmal der Erfindung wird der höhenabhängige Luftdruck und der Ladedruck des Motors gemessen und in Abhängigkeit von den ermittelten Werten wird eine zur Aufrechterhaltung des Motorbetriebs erforderliche, dem Motor zuzuführende minimale Kraftstoffmenge ermittelt. Somit steht für den störungsfreien Motorbetrieb immer eine definierte Mindestbrennstoffmenge zur Verfügung.

Gemäß einem noch anderen wichtigen Merkmal der Erfindung werden der höhenabhängige barometrische Druck und der Ladedruck des selbstverdichtenden Motors erfasst und entsprechend dem jeweiligen Luftdruck wird der Ladedruck auf einen bestimmten Sollwert nachgeregelt, um so eine stabile Verbrennung und eine minimal mögliche Leistung des Triebwerks zu gewährleisten.

In weiterer Ausbildung der Erfindung werden die vom Piloten eingestellte Leistung und Motorparameter wie Drehzahl, Luft- und Wassertemperatur sowie die Brennstoffmenge, der Ladedruck und schließlich der Luftdruck gemessen und in entsprechenden Auswerteeinheiten ausgewertet, um auf dieser Basis die höhenabhängige Einstellung des Einspritz- und Verbrennungszeitraums, der minimalen Brennstoffmenge entsprechend dem jeweiligen Ladedruck oder eines von der jeweiligen Höhe unabhängigen, konstanten Ladedrucks steuern zu können.

Mit dem erfindungsgemäßen Verfahren ist es möglich, Dieselmotoren, die auch mit dem weltweit verfügbaren Flugkraftstoff Kerosin betrieben werden können, als Flugzeugmotoren einzusetzen, die auch in größeren Höhen zuverlässig und störungsfrei arbeiten. Das mit einem erfindungsgemäß gesteuerten selbstverdichtenden Motor ausgerüstete Flugzeug kann mit geringer Leistung auch in größeren Höhen fliegen, ohne dass der Motor ausgeht. Dem Pilot steht ein größerer Arbeitsbereich zur Verfügung und eine Leistungsreduktion aufgrund einer verminderten Verdichtung (Leistungsstellungen) in einer bestimmten Höhe wird verhindert.

Ein Ausführungsbeispiel der Erfindung wird nachfolgend erläutert.

Bei einem auch in größeren Höhen einsetzbaren, von einem Dieselmotor angetriebenen Flugzeug werden neben der vom Piloten eingegeben Leistung auch die Drehzahl des Motors und der der Flughöhe entsprechende Luftdruck sowie der Ladedruck erfasst. Auf der Basis des entsprechend der gewünschten Leistung und des jeweiligen Luftdrucks errechneten notwendigen Ladedrucks und des Vergleichs mit dem gemessenen Ladedruck wird mit einem PID-Regler ein Ladedrucksteuerventil angesteuert und der Ladedruck auf einen an die betreffende Flughöhe angepassten Wert nachgeregelt.

Auf ähnliche Art kann nach Erfassung der Drehzahl und der Leistung und Ermittlung einer Basiskraftstoffmenge sowie auf der Grundlage der Messung des Luftdrucks und des Ladedrucks und einer daraus errechneten Mindestbrennstoffmenge entsprechend dem auf der jeweiligen Flughöhe basierenden Ladedruck ein Injektionsmodul angesteuert werden, um bei jedem Ladedruck eine minimale Kraftstoffmenge in den Zylinder einzuspritzen.

## Patentansprüche

1. Verfahren zum Betreiben eines selbstverdichtenden Flugzeugmotors, insbesondere eines Flugdieselkolbenmotors, der mit einem bestimmten Ladedruck der in einen Zylinder eingebrachten Verbrennungsluft und mit einer Vor- und einer Haupteinspritzung des Kraftstoffs am oberen Totpunkt betrieben wird, **dadurch gekennzeichnet, dass** die Einspritzzeit für das Einspritzen des Kraftstoffs in die verdichtete Verbrennungsluft und damit der Zeitraum der Kraftstoffverbrennung mit steigender Flughöhe auf einen früheren Zeitpunkt nach vorn verschoben wird, wobei der Zeitpunkt der Vor- und der Haupteinspritzung als Paket vorverlegt wird, und in Abhängigkeit von der Höhe des mit steigender Flughöhe sinkenden Ladedrucks die Zufuhr einer dem jeweiligen Ladedruck entsprechenden minimalen Kraftstoffmenge geregelt wird.

2. Verfahren nach Anspruch 1, **dadurch gekennzeichnet, dass** der zeitliche Abstand zwischen der Voreinspritzung und der Haupteinspritzung des Kraftstoffs mit steigender Flughöhe angepasst wird.

3. Verfahren nach Anspruch 1 oder 2, **dadurch gekennzeichnet, dass** der Start der Verbrennung auf einen Zeitpunkt vor dem Erreichen des oberen Totpunkts des Kolbens im Zylinder nach vorn verschoben wird.

4. Verfahren nach einem der Ansprüche 1 bis 3, **dadurch gekennzeichnet, dass** zur Einstellung des Einspritz-und Verbrennungsbeginns sowie des zeitlichen Abstands zwischen der Vor- und der Haupteinspritzung sowie eines konstanten Ladedrucks oder der Kraftstoffmenge die Motorparameter wie Drehzahl, Leistung, Ladedruck, Brennstoffmenge sowie Luft- und Wassertemperatur und der der Flughöhe entsprechende barometrische Druck erfasst und in einer Auswerteeinheit verarbeitet werden.

## Claims

1. A method for operating a self-compressing aircraft engine, in particular an aircraft diesel piston engine, which is operated at a specific boost pressure of the combustion air introduced into a cylinder, and with a pilot and primary fuel injection at the top dead center, **characterized in that** the injection time for injecting the fuel into the compressed combustion air, and hence the timeframe for fuel combustion, is shifted forward to an earlier time as cruising altitude rises, wherein the time of the pilot and primary fuel injection is shifted forward as a packet, and the supply of a minimal quantity of fuel corresponding to the respective boost pressure is regulated as a function of the boost pressure that decreases as cruising altitude increases.

2. The method of claim 1, **characterized in that** the time interval between the pilot injection and primary injection of fuel is adjusted as cruising altitude rises.

3. The method of claim 1 or 2, **characterized in that** the initiation of combustion is shifted forward to a time before the top dead center of the piston in the cylinder is reached.

4. The method of one of claims 1 to 3, **characterized in that** engine parameters like speed, power, boost pressure, fuel quantity as well as air and water temperature and barometric pressure corresponding to cruising altitude are acquired and processed in an evaluator unit in order to set the injection and combustion start, as well as the time interval between the pilot and primary injection as well as a constant boost pressure or the fuel quantity.

## Revendications

1. Un procédé pour opérer un moteur d'avion auto-comprimant, en particulier un moteur diesel à piston pour avion, lequel est opéré avec une pression d'admission déterminée de l'air de combustion apporté dans un vérin et avec une pré-injection et une injection principale du carburant au point mort supérieur, **caractérisé en ce que** la durée d'injection pour l'injection du carburant dans l'air de combustion comprimé et donc la période de la combustion du carburant avec une altitude de vol croissante sont changées en avant à un instant précédent, lequel instant de la pré-injection et de l'injection principale est avancé en paquet, et l'alimentation d'une quantité minimale du carburant correspondant à la pression d'admission est réglée en dépendance de l'hauteur de la pression d'admission baissant avec l'altitude de vol croissante.

2. Le procédé selon la revendication 1, **caractérisé en ce que** l'intervalle temporel entre la pré-injection et l'injection principale du carburant est adapté avec l'altitude de vol croissante.

3. Le procédé selon la revendication 1 ou 2, **caractérisé en ce que** le début de la combustion est changé en avant à un instant avant d'atteindre le point mort supérieur du piston dans le vérin.

4. Le procédé selon une des revendications 1 à 3, **caractérisé en ce que** les paramètres du moteur tels que la vitesse de rotation, la performance, la pression d'admission, la quantité du carburant ainsi que la température de l'air et de l'eau et la pression barométrique correspondant à l'altitude de vol sont collectés et traités par une unité d'évaluation pour l'ajustage du début de l'injection et de combustion ainsi que de l'intervalle temporel entre la pré-injection et l'injection principale ainsi que d'une pression d'admission constante ou de la quantité du carburant.
